# EUROPÄISCHE PATENTSCHRIFT

(11) **EP 2 444 213 B1**
(45) Veröffentlichungstag und Bekanntmachung des Hinweises auf die Patenterteilung: **11.01.2017**
(21) Anmeldenummer: 11007674.2
(22) Anmeldetag: 21.09.2011
(51) Int. Cl.: G01B 11/04, G01B 11/25, B26D 1/14, B26D 1/25, B26D 5/00, B26D 5/34, B26D 7/30

(54) **Abtastvorrichtung und Verfahren zum Ermitteln der Kontur eines Objektes**
Scanning device and method for determining the contours of an object
Dispositif de balayage et procédé de détermination du contour d'un objet

(30) Priorität: 22.10.2010 DE 102010049310
(43) Veröffentlichungstag der Anmeldung: 25.04.2012
(73) Patentinhaber: Weber Maschinenbau GmbH Breidenbach, 35236 Breidenbach (DE); Wente / Thiedig GmbH, 38108 Braunschweig (DE)
(72) Erfinder: Thiedig, Ullrich, Dipl.-ing., 38173 Erkerode (DE)
(74) Vertreter: Grünecker Patent- und Rechtsanwälte PartG mbB

(56) Entgegenhaltungen:
- DE-A1- 10 136 809
- DE-A1-102008 047 816
- US-A1- 2003 205 120
- US-A1- 2005 120 844
- US-A1- 2007 177 160
- US-A1- 2010 007 896
- US-A1- 2010 008 588

## Beschreibung

Die Erfindung bezieht sich auf eine Abtastvorrichtung gemäß dem Oberbegriff des Anspruchs 1 sowie auf ein Verfahren gemäß dem Oberbegriff des Anspruchs 12.

Eine solche Abtastvorrichtung und ein solches Verfahren gehen aus der EP 1 178 878 B1 oder aus der DE 196 04 254 hervor. In den Erteilungs-, Einspruchs- beziehungsweise Nichtigkeitsverfahren zu diesen beiden Schutzrechten wurden eine Vielzahl weiterer Dokumente zitiert, die ähnliche Abtastvorrichtungen und Verfahren betreffen, insbesondere die JP 1132333 A oder die JP 7184534 A.

Diese herkömmlichen Abtastvorrichtungen dienen zum Erfassen der Außenkontur eines Objekts, bei dem es sich insbesondere um ein Lebensmittel handeln kann, das in gewichtskonstante Portionen oder Scheiben geschnitten werden soll. Verteilt über die Länge des Objekts werden eine Vielzahl von Konturen ermittelt, aus denen anschließend ein Volumenmodell des Objekts berechnet werden kann, d.h. ein dreidimensionales Modell des Objekts. Wenn zusätzlich noch die Gewichtskraft des Objekts gemessen wird, kann aus dem Gewicht und aus dem Gesamtvolumen eine mittlere Dichte des Produkts berechnet werden, aus der sich wiederum unter Berücksichtigung der Außenkontur die Schnittpositionen für gewichtskonstante Scheiben berechnen lassen.

Die Außenkontur des Objekts wird im Stand der Technik häufig mit der sogenannten Lichtschnitttechnik ermittelt. Bei den vorstehend zitierten Dokumenten wird dafür mittels eines oder mehrerer überlappender Zeilenlaser eine Linie von Laserlicht auf das Produkt projiziert. Diese linienförmige Projektion des Laserlichts wird mittels einer Kamera abgebildet. Aus dem Verlauf und der Lage der Lichtlinie auf dem Objekt kann auf den Verlauf der jeweiligen Oberflächenkontur zurückgeschlossen werden.

Schneidemaschinen zum Aufschneiden von Lebensmitteln, sogenannte Slicer, sind zum Beispiel aus den folgenden Dokumenten bekannt: DE 3713536 A1, DE 3923337 A1, DE 4413568 C5, DE 10054514 A1, DE 10131701 A1, DE 10136809 A1, US 2005/0120844 A1, US 2003/0205120 A1, DE 19604254 B4, DE 10327249 A1, DE 19525741 A1, DE 19713163 A1, DE 19839257 A1, DE 19844436 C2, und DE 102009023729 A1.

Einige dieser Schneidemaschinen, beispielsweise diejenige der DE 10136809 A1, der US 2005/0120844 A1 oder der US 2003/0205120 A1, verwenden bereits Abtastvorrichtungen, um die Außenkontur der aufzuschneidenden Lebensmittel zu erfassen. Häufig ist das Ziel dieser Konturerfassung, möglichst gewichtskonstante Scheiben oder Portionen des Produkts aufzuschneiden.

Auch abseits des Bereichs der Lebensmittelverarbeitung sind Abtastvorrichtungen zur Erfassung der Kontur oder 3D-Koordinaten von Objekten bekannt. So beschreibt die DE 10 2008 047 816 A1 eine Vorrichtung zur Ermittlung der 3D-Koordinaten von Zähnen oder Zahnmodellen. Problematisch an dieser Vorrichtung ist jedoch unter anderem, dass der dort verwendete Scanner erst um das gesamte Objekt herumgeführt werden muss, um genügend Daten für die Objektrepräsentation zu erhalten. Die US 2007/01777160 A1 offenbart eine weiter Vorrichtung zum Gewinnen von 3D-Koordinaten eines Objekts, insbesondere eines Buchs. Die US 2010/0008588 A1 beabsichtigt die 3D-Lokalisation bestimmter Strukturen auf Objekten, nicht die 3D-Erfassung dieser Objekte selbst. Die US 2010/0007896 A1 offenbart schließlich eine Vorrichtung zum Vermessung insbesondere der Höhe elektronischer Komponenten.

In der Realität hat sich herausgestellt, dass die herkömmlichen Abtastvorrichtungen in ihrer Präzision noch verbesserungswürdig sind. Aufgabe der vorliegenden Erfindung ist es, eine Abtastvorrichtung und ein Verfahren zum Ermitteln der Kontur eines Objekts zur Verfügung zu stellen, die mit konstruktiv möglichst einfachen Maßnahmen hinsichtlich ihrer Präzision verbessert sind.

Diese Aufgabe wird gelöst durch eine Abtastvorrichtung mit den Merkmalen des Anspruchs 1 beziehungsweise durch ein Verfahren mit den Merkmalen des Anspruchs 12 oder durch eine Schneidemaschine gemäß Anspruch 15. Vorteilhafte Weiterbildungen der Erfindung sind in den Unteransprüchen angegeben.

Die erfindungsgemäße Abtastvorrichtung zeichnet sich dadurch aus, dass sie im Gegensatz zum Stand der Technik als Lichtquelle keinen Laser verwendet, sondern eine inkohärente Lichtquelle (oder mehrere inkohärente Lichtquellen). Durch das Verwenden einer inkohärenten Lichtquelle werden Interferenzerscheinungen wie die sogenannten Speckles auf der Oberfläche des Objekts vermieden. Solche Interferenzerscheinungen führen ansonsten zu einer inhomogenen und nicht kontrollierbaren Lichtverteilung, die die Auflösung verschlechtert. Dieser Nachteil wird durch die Verwendung einer inkohärenten Lichtquelle vermieden. Darüber hinaus haben inkohärente Lichtquellen den Vorteil, dass sie im Gegensatz zu Laserlicht auch bei höheren Lichtintensitäten nicht schädlich für das menschliche Auge sind. Mit einer inkohärenten Lichtquelle kann das Lichtmuster daher ohne aufwändige Schutzmaßnahmen erzeugt werden, selbst wenn die Lichtintensität der Lichtquelle höher sein sollte als bei dem herkömmlich verwendeten Zeilenlaser.

Darüber hinaus sieht die Erfindung vor, dass ein Schattenwerfer, d.h. eine schattenwerfende Struktur, zwischen der Lichtquelle und dem Objekt angeordnet ist. Das von der Lichtquelle ausgehende, inkohärente Licht fällt zunächst auf den Schattenwerfer und wird teilweise von diesem blockiert. Nur in den nicht blockierten Bereichen gelangt das Licht weiter zum Objekt, um dort das Lichtmuster auf der Oberfläche des Objekts zu bilden. Dieser Schattenwerfer, d.h. die schattenwerfende Struktur, kann sehr simpel ausgebildet sein. In einem einfachen Fall kann es sich um eine Feldblende handeln, d.h. um eine flächige Struktur, die Licht nur jenseits einer Schattenkante passieren lässt. Das Lichtmuster auf der Oberfläche des Objekts ist in diesem Fall eine beleuchtete Halbebene.

Das Vorsehen eines Schattenwerfers zwischen der Lichtquelle und dem Objekt hat ferner den Vorteil, dass dieser Schattenwerfer bei Bedarf ausgetauscht werden kann, um auf konstruktiv einfache Weise ein anderes Lichtmuster auf dem Objekt zu erzeugen, wenn dieses andere Lichtmuster für die Ermittlung der Kontur des jeweiligen Objekts besser geeignet sein könnte.

Als besonders günstig hat sich der Einsatz der erfindungsgemäßen Abtastvorrichtung auf einer oder für eine Schneidemaschine zum Aufschneiden von Lebensmitteln herausgestellt, einem sogenannten Slicer. Dabei kann die von der Abtastvorrichtung ermittelte Kontur des Objekts, d. h. des aufzuschneidenden oder aufgeschnittenen Lebensmittels, einer Steuerung zugeführt werden, die aus der ermittelten Kontur beispielsweise ein 3D-Volumenmodell des aufzuschneidenden Lebensmittels simuliert. Anhand dieser Simulation können anschließend, falls gewünscht, gewichts- oder volumenkonstante Portionen berechnet und mittels der Schneidemaschine geschnitten werden.

Bevorzugt handelt es sich bei der wenigstens einen Lichtquelle um eine Punktlichtquelle. Im Gegensatz zu einer flächigen Lichtquelle kann mittels einer Punktlichtquelle auf konstruktiv und optisch einfache Art und Weise ein scharfes Lichtmuster auf der Oberfläche des Objekts erzeugt werden. Dies verbessert die Präzision der erfindungsgemäßen Abtastvorrichtung weiter.

In einer günstigen Ausführungsvariante handelt es sich bei der wenigstens einen inkohärenten Lichtquelle um eine lichtemittierende Diode, abgekürzt LED. Solche LEDs sind kostengünstig, haben eine lange Lebensdauer, sind für das menschliche Auge unschädlich, erzeugen kaum Wärme und lassen sich in ihrer Helligkeit über den an ihnen angelegten Strom regeln. Darüber hinaus sind sie in einer Vielzahl unterschiedlicher Farben erhältlich. Für die erfindungsgemäße Abtastvorrichtung können LEDs mit einer Farbe ausgewählt werden, die den höchstmöglichen Kontrast des Lichtmusters auf der Oberfläche des Objekts bietet.

Besonders zweckmäßig ist es, wenn nicht nur eine Lichtquelle vorgesehen ist, sondern eine Mehrzahl von inkohärenten Lichtquellen. Dies hat den Vorteil, dass auch eine größere Fläche auf dem Objekt mit einer konstanten Intensität ausgeleuchtet werden kann, so dass die Kontur des Objekts auch bei größeren, ausgedehnten Objekten über das gesamte Objekt mit hoher Präzision ermittelt werden kann.

Wenn mehrere Punktlichtquellen vorgesehen sind, ist es vorteilhaft, wenn diese Punktlichtquellen auf einer Linie angeordnet sind, deren Verlauf einer Kontur des Schattenwerfers entspricht oder dazu kongruent ist. Wenn der Schattenwerfer eine gerade Außenkante aufweist, könnten die Punktlichtquellen also beispielsweise auf einer Geraden angeordnet sein, um jeden Punkt entlang der Außenkante des Schattenwerfers gleichmäßig beleuchten zu können.

Wenn der Schattenwerfer eine solche, beispielsweise gerade, Schattenkante aufweist, kann das Lichtmuster auf dem Objekt eine beleuchtete Halbebene sein. Diese besonders einfache Lichtverteilung kann mittels der Kamera gut erfasst und mittels einer Bilderkennung präzise ausgewertet werden.

Je nach Form des Objekts und der jeweiligen Anordnung der Lichtquelle und des Schattenwerfers kann es vorteilhaft sein, wenn die Schattenkante gerade ist oder wenn sie eine Krümmung aufweist. Das Ziel besteht jeweils darin, auf der Oberfläche des Objekts ein möglichst kontrastreiches Lichtmuster zu erzeugen, das mit hoher Genauigkeit ausgelesen und ausgewertet werden kann.

Vorzugsweise ist eine Strahlformungsoptik für das inkohärente Licht vorgesehen. Diese Strahlformungsoptik kann für eine weitere Verbesserung der Schärfe und des Kontrasts des auf der Oberfläche des Objekts erzeugten Lichtmusters sorgen. Bei der Strahlformungsoptik kann es sich um eine Linse oder um ein Linsensystem handeln.

In einer vorteilhaften Ausführungsvariante sind die Positionen der wenigstens einen Lichtquelle, die Position und/oder die Orientierung des Schattenwerfers und/oder eine optische Eigenschaft der Strahlformungsoptik einstellbar. Diese Einstellbarkeit oder Justagemöglichkeit erlaubt es, die an der Erzeugung des Lichtmusters beteiligten Komponenten der Abtastvorrichtung so einzustellen, dass sich im Sichtfeld der Kamera ein möglichst gut auslesbares Lichtmuster mit möglichst hohem Kontrast beziehungsweise mit möglichst scharfen Kanten bildet.

Die mehreren Punktlichtquellen können in Form einer gemeinsamen Lichtleiste vorgesehen sein. Alternativ ist es denkbar, ein weitgehend homogenes, linienförmiges Lichtband zu verwenden.

Vorzugsweise ist eine Auswerteeinheit vorgesehen und dazu eingerichtet, in dem von der Kamera erfassten Lichtmuster den Verlauf einer Schattengrenze zu ermitteln. Diese Auswerteeinheit kann in die Abtastvorrichtung integriert sein, oder sie kann durch eine Datenverbindung mit der Abtastvorrichtung verbunden sein. Die Bestimmung der Kontur aufgrund des Verlaufs einer Schattengrenze ist deutlich präziser als die herkömmliche Bestimmung der Kontur durch den Verlauf einer Laser-Lichtlinie. Während bei der herkömmlichen Lichtlinie die Intensität des Lichts ausgehend vom Maximum zu beiden Seiten abfällt und sich auch bei Fokussierung ein vergleichsweise breiter Lichtstreifen ergibt, steigt die Lichtintensität bei einer Schattengrenze von einem dunklen Bereich zu einem hellen Bereich lediglich in einer Richtung an. Durch eine geeignet programmierte Bilderkennung kann nun an jedem Punkt der Schattengrenze oder an diskreten Punkten entlang der Schattengrenze ermittelt werden, wo beispielsweise die Intensität des Lichts eine bestimmte Schwelle überschreitet, oder wo die Lichtintensität dem Mittelwert der Lichtintensitäten im hellen und im dunklen Bereich entspricht. Im Unterschied zum herkömmlichen Lichtschnittverfahren muss also bei der erfindungsgemäßen Version des Lichtschnittverfahrens nicht der Ort des Maximums einer Lichtverteilung erkannt werden, sondern es genügt das Ermitteln des Orts, an dem eine bestimmte Schwelle überschritten wird, oder sogar eine Mittelwertbildung. Dies verringert den Rechenaufwand erheblich und führt zu einer Beschleunigung des Abtastverfahrens.

Die Auswerteeinheit kann schließlich auch dazu eingerichtet sein, aus dem ermittelten Verlauf der Schattengrenze eine Kontur des Objekts zu bestimmen.

Die Erfindung bezieht sich auch auf ein Verfahren zum Ermitteln der Kontur eines Objekts. Bei diesem Verfahren erzeugt eine Lichtquelle, die wenigstens eine LED umfasst, ein Lichtmuster auf der Oberfläche des Objekts, und das Lichtmuster wird mittels einer Kamera erfasst. Wie bereits vorstehend erläutert, blockiert ein Schattenwerfer den Weg eines Teils des Lichts von der LED zum Objekt, um so auf dem Objekt ein Lichtmuster zu erzeugen, insbesondere eine Schattengrenze.

Eine Nebenlichtunterdrückung kann verbessert werden, indem die wenigstens eine LED geblitzt betrieben wird.

Im Folgenden wird ein vorteilhaftes Ausführungsbeispiel der Erfindung anhand einer Zeichnung näher erläutert. Im Einzelnen zeigen:
- Figur 1: eine schematische Ansicht eines Ausführungsbeispiels einer erfindungsgemäßen Abtastvorrichtung quer zur Transportrichtung des Objekts,
- Figur 2: eine Ansicht der in Figur 1 gezeigten Abtastvorrichtung in Transportrichtung des Objekts,
- Figur 3a: einen Ausschnitt aus dem mit der Abtastvorrichtung erzeugten Lichtmuster auf dem Objekt,
- Figur 3b: die Intensitätsverteilung des Lichtmusters an der in Figur 3a mit III bezeichneten Stelle, und
- Figur 4: eine Schneidemaschine mit einer Abtastvorrichtung.

Gleiche Komponenten sind in den Figuren durchgängig mit gleichen Bezugszeichen versehen.

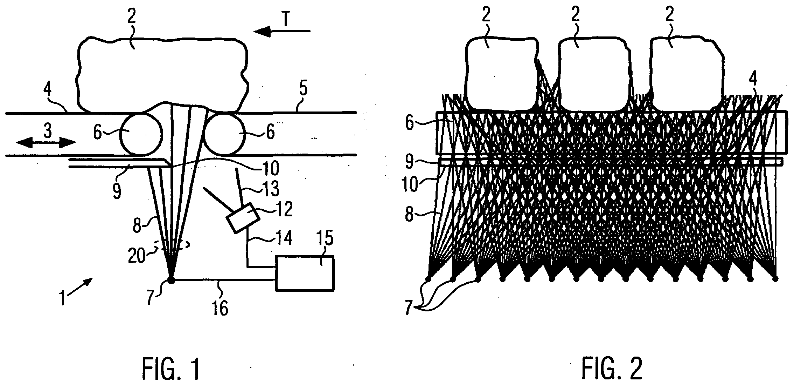

Figur 1 zeigt in schematischer Weise eine erfindungsgemäße Abtastvorrichtung 1. Sie dient zum Ermitteln der Kontur eines Objekts 2, bei dem es sich beispielsweise um ein Lebensmittelprodukt handeln kann.

Die Abtastvorrichtung 1 ist unterhalb einer Förderstrecke 3 für die Objekte 2 angeordnet. Diese Förderstrecke weist ein erstes Förderband 4 und ein zweites Förderband 5 auf, die jeweils um Umlenk- oder Antriebsrollen 6 geführt sind. Zwischen den einander benachbarten Umlenkrollen 6 der beiden Förderbänder 4, 5 ist ein Spalt vorgesehen, über dem die Unterseite des Objekts 2 freiliegt. An dieser Stelle wird mittels der Abtastvorrichtung 1 die Kontur der Unterseite des Objekts 2 ermittelt.

Die Abtastvorrichtung 1 verfügt über eine Lichtquelle 7. Im vorliegenden Ausführungsbeispiel handelt es sich bei der Lichtquelle 7 um eine Gruppe von entlang einer Geraden angeordneten lichtemittierenden Dioden (LEDs) 7. Diese LEDs 7 senden inkohärente Lichtstrahlung 8 aus, von der in Figur 1 einzelne Lichtstrahlen dargestellt sind. Zur Klarstellung sei an dieser Stelle festgehalten, dass die Lichtquelle 7 nicht einzelne, diskrete Strahlen aussendet, sondern ein kompaktes Lichtbündel. Die Darstellung diskreter Lichtstrahlen 8 in Figur 1 dient lediglich der Übersichtlichkeit.

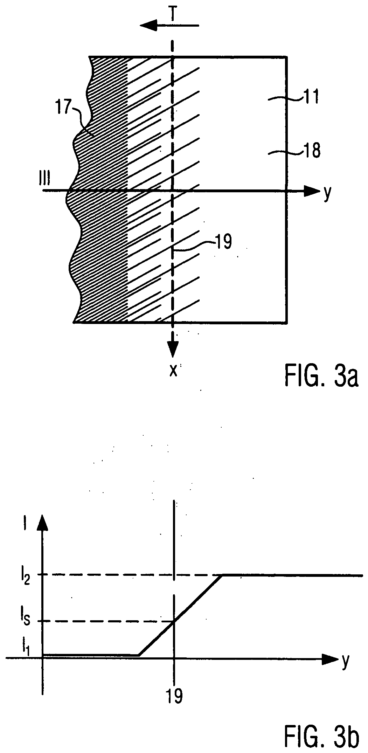

Zwischen der Lichtquelle 7 und dem Objekt 2 befindet sich ein Schattenwerfer 9, d.h. eine schattenwerfende Struktur 9. Im vorliegenden Ausführungsbeispiel handelt es sich beim Schattenwerfer 9 um eine Feldblende, beziehungsweise Leuchtfeldblende, die den von der Lichtquelle 7 beleuchteten Bereich auf dem Objekt 2 begrenzt. Sämtliches Licht 8, das in der Ansicht in Figur 1 links von einer Schattenkante 10 auf den Schattenwerfer 9 trifft, wird vom Schattenwerfer 9 blockiert. Das übrige Licht der Lichtquelle 7 gelangt auf das Objekt 2 und bildet auf der Unterseite des Objekts 2 ein Lichtmuster 11 (siehe auch Figur 3a). Im vorliegenden Ausführungsbeispiel entspricht das Lichtmuster 11 aufgrund der Form und Anordnung des Schattenwerfers 9 einer beleuchteten Halbebene: Die eine Hälfte der Ebene ist hell erleuchtet, während die andere Hälfte der Ebene dunkel bleibt.

Eine Kamera 12, beispielsweise eine CCD-Kamera, ist so angeordnet und ausgerichtet, dass sie mit ihrem Gesichtsfeld 13 das Lichtmuster 11 auf dem Objekt 2 erfasst und abbildet. Über eine Datenleitung 14 ist die Kamera 12 mit einer Steuer- und Auswerteeinheit 15 verbunden. Eine weitere Steuer- und Datenleitung 16 verbindet die Steuer- und Auswerteeinheit 15 mit der Lichtquelle 7.

Figur 2 zeigt die in Figur 1 dargestellte Abtastvorrichtung 1 in Transportrichtung T der Objekte 2 entlang der Förderstrecke 3. Zu sehen ist hier, dass mehrere (im vorliegenden Ausführungsbeispiel: drei) Objekte 2 nebeneinander auf der Oberfläche des Förderbandes 4 der Förderstrecke 3 liegen. Zu sehen ist vor allem auch, dass die Abtastvorrichtung 1 eine Vielzahl von LEDs 7 aufweist. Im dargestellten Ausführungsbeispiel sind 15 LEDs 7 auf einer gemeinsamen Geraden angeordnet, die parallel liegt zur Schattenkante 10 des Schattenwerfers 9. Die Lichtstrahlen 8 der Lichtquellen 7, die am Schattenwerfer 9 vorbeigelangen, treffen unter unterschiedlichen Winkeln auf die Oberflächen der Objekte 2. Damit wird es möglich, auch Hinterschneidungen auf der Oberfläche der Objekte 2 zu beleuchten, um die Kontur der Objekte 2 noch präziser erfassen zu können.

Figur 3a zeigt das Lichtmuster 11, das sich auf der Oberfläche des Objekts 2 mit der in Figur 1 dargestellten Abtastvorrichtung 1 ergibt. Dieses Lichtmuster 11, von dem in Figur 3a nur ein kleiner Ausschnitt dargestellt ist, umfasst einen dunklen Bereich 17 und einen hellen Bereich 18, die an einer Schattengrenze 19 aneinander grenzen. Im Idealfall ist die Schattengrenze 19 extrem scharf, so dass die Lichtintensität I dort sprunghaft von einem niedrigen Wert im dunklen Bereich 17 auf einen hohen Wert im hellen Bereich 18 ansteigt. In der Realität wird jedoch die Lichtintensität I zumindest bei entsprechend hoher Vergrößerung an der Schattengrenze 19 nicht sprunghaft ansteigen, sondern kontinuierlich. Dies ist in Figur 3a durch die Schattierungen angedeutet.

Die Verteilung der Lichtintensität in der Richtung y (entgegen der Transportrichtung T) des Lichtmusters 11 gemäß Figur 3a ist in Figur 3b noch einmal in einem Intensitätsdiagramm dargestellt. Im dunklen Bereich 17 hat die Lichtintensität einen vergleichsweise niedrigen Wert I₁. Im Bereich der Schattengrenze 19 steigt die Lichtintensität (im vorliegenden, idealisierten Beispiel: linear) vom niedrigen Wert I₁ auf einen hohen Wert I₂ im hellen Bereich 18 an.

Im Folgenden werden der Betrieb der Abtastvorrichtung 1 beziehungsweise der Ablauf eines Ausführungsbeispiels des erfindungsgemäßen Verfahrens erläutert.

Die Objekte 2 werden in Transportrichtung T auf der Förderstrecke 3 transportiert. Dieser Transport kann kontinuierlich erfolgen oder in inkrementellen Schritten. Mittels der Abtastvorrichtung 1 wird während des Transports der Objekte 2, bei einem intermittierenden Transport vorzugsweise während des Stillstands des Objekts 2, ein Lichtmuster 11 auf der Unterseite des Objekts 2 erzeugt. In der bereits erläuterten Weise blockiert der Schattenwerfer 9 einen Teil des von den Lichtquellen 7 ausgesandten Lichts 8, um so auf der Unterseite des Objekts 2 beispielsweise eine Halbebene 18 zu beleuchten. Die Lichtquellen 7 können mittels der Steuer- und Auswerteeinheit 15 so angesteuert werden, dass sie geblitzt betrieben werden, um nur während des Blitzes ein Lichtmuster 11 auf dem Objekt 2 zu erzeugen.

Das auf dem Objekt 2 erzeugte Lichtmuster 11 wird mittels der Kamera 12 erfasst. Das von der Kamera 12 aufgenommene Bild gelangt in digitaler Form über die Datenleitung 14 zur Steuer- und Auswerteeinheit 15. Diese ist so programmiert, dass sie aus der Intensitätsverteilung auf dem von der Kamera 12 erfassten Bild auf die Schattengrenze 19 und deren Verlauf zurückschließen kann.

Zur Ermittlung der Schattengrenze 19 stehen unterschiedliche Verfahren zur Verfügung. Beispielsweise kann die Auswerteeinheit 15 in Richtung y, d.h. in jeder Zeile des von der Kamera 12 erfassten Bildes, ermitteln, an welchem Pixel ein bestimmter Schwellen-Intensitätswert I_{S} erreicht oder überschritten wird. Dieser Pixel wird dann als Teil der Schattengrenze 19 definiert. Alternativ dazu könnte die Auswerteeinheit 15 die Intensitätswerte I₁, I₂ im dunklen beziehungsweise im hellen Bereich 17, 18 des Lichtmusters 11 ermitteln und den Mittelwert M = (I₁ + I₂)/2 bilden. Derjenige Pixel, dessen Intensität am Besten dem Mittelwert M entspricht, wird als Teil der Schattengrenze 19 definiert. Die Schattengrenze 19 verläuft vorzugsweise senkrecht zur Transportrichtung T, d.h. die Ebene, die die LEDs 7 und die Schattenkante 10 enthält, ist senkrecht zur Transportrichtung T.

Aus dem Verlauf der Schattengrenze 19 quer über das Objekt 2 wird auf die Kontur des Objekts 2 an dieser Stelle zurückgeschlossen. Die Auswerteeinheit 15 kann ferner dazu programmiert sein, aus dem Verlauf der Schattengrenze 19 auf die Fläche des Objekts 2 in der beleuchteten Ebene zurückzuschließen, und gegebenenfalls aus einer Integration verschiedener Flächenwerte das Volumen des Objekts 2 zu berechnen. Dieses Volumen kann - wie im Stand der Technik beschrieben - beispielsweise zu einer Schnittplanung herangezogen werden, um mit einer nachgeordneten Schneideinrichtung gewichtskonstante Portionen oder Scheiben aus dem Objekt 2 zu schneiden.

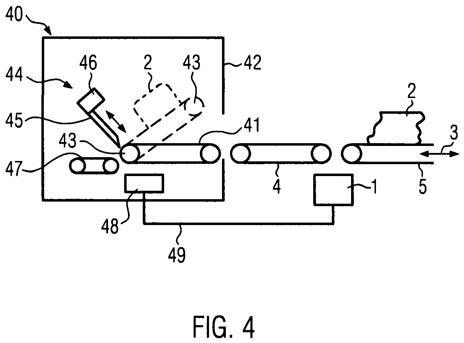

Figur 4 zeigt die Abtastvorrichtung 1 in Kombination mit einer lediglich schematisch dargestellten Schneideinrichtung oder Schneidemaschine 40 zum Aufschneiden von Lebensmitteln 2. Insbesondere sollen mit der Schneideinrichtung gewichts- oder volumenkonstante Portionen oder Scheiben aus dem der Schneideinrichtung 40 zugeführten Lebensmittel-Objekt 2 gewonnen werden. Wie bereits anhand von Figur 1 erläutert, ist die Abtastvorrichtung 1 entlang einer Förderstrecke 3 angeordnet, auf der die aufzuschneidenden Lebensmittel-Objekte 2 über mehrere Förderbänder 4, 5 der Schneideinrichtung 40 zugeführt werden. In Transportrichtung mit der Förderstrecke 3 fluchtend ist in der Schneieinrichtung 40 eine Auflage 41 vorgesehen, bei der es sich um einen Auflagetisch oder um ein weiteres Förderband handeln kann. Diese Auflage 41 befindet sich bereits innerhalb eines Gehäuses 42 der Schneideinrichtung 40 und ist mit ihrem der Förderstrecke 3 zugewandten, rückseitigen Ende 43 um eine horizontale Achse 44 hochschwenkbar. In dem hochgeschwenkten, in Figur 4 gestrichelt dargestellten Zustand bildet die Auflage 41 eine gegenüber der Horizontalen geneigte Auflagefläche für ein auf ihr abgelegtes Objekt 2.

Die Schneideinrichtung 40 weist ferner einen Schneidkopf 44 auf. Dieser Schneidkopf 44 verfügt über ein Schneidmesser 45, das mittels eines Antriebs 46 translatorisch oder rotatorisch angetrieben ist. Durch das Schneidmesser 45 können vom Objekt 2 Scheiben oder Portionen abgeschnitten werden, die anschließend auf ein weiteres Fördermittel 47 gelangen und aus der Schneideinrichtung 40 heraustransportiert werden können.

Zur Steuerung der Schneideinrichtung 40 ist eine Steuerung 48 vorgesehen, die in die Schneideinrichtung 40 integriert sein kann. Über eine geeignete Verbindung 49 ist die Steuerung 48 mit der Abtastvorrichtung 1 verbunden, um Daten und Steuerbefehle austauschen zu können. Die Abtastvorrichtung 1 kann damit als mit der Schneideinrichtung oder Schneidemaschine 40 kombiniert oder als in die Schneideinrichtung oder Schneidemaschine 40 integriert betrachtet werden.

Bei der Schneideinrichtung oder Schneidemaschine 40 kann es sich abgesehen von der Abtastvorrichtung 1 um einen sogenannten Slicer handeln, der zum Beispiel aus den folgenden Dokumenten bekannt ist: DE 3713536 A1, DE 3923337 A1, DE 4413568 C5, DE 10054514 A1, DE 10131701 A1, DE 19604254 B4, DE 10327249 A1, DE 19525741 A1, DE 19713163 A1, DE 19839257 A1, DE 19844436 C2, und DE 102009023729 A1. Auf den Inhalt aller dieser Dokumente wird hiermit ausdrücklich Bezug genommen.

Die Steuer- und Auswerteeinheit 15 der Abtastvorrichtung 1 kann weiterhin in der Abtastvorrichtung 1 selbst implementiert sein. Alternativ könnte die Steuer- und Auswerteeinheit 15 oder ein Teil davon jedoch auch in der Steuerung 48 der Schneidemaschine oder Schneideinrichtung 40 implementiert sein.

Im Betrieb des in Figur 4 dargestellten Systems werden die aufzuschneidenden Objekte 2 entlang der Förderstrecke 3 zur Schneideinrichtung 40 transportiert. Während dieses Transports erfasst die Abtastvorrichtung 1 die Kontur der Objekte 2. In Abhängigkeit von der erfassten Kontur erfolgt eine Schnittplanung. Diese kann, muss aber nicht auf der Grundlage eines aus den ermittelten Konturen gewonnenen 3D-Modells des Objekts 2 berechnet werden. Anhand der Schnittplanung steuert die Steuerung 48 den Schneidkopf 44 geeignet an, um gewichts- oder volumenkonstante Portionen oder Scheiben aus dem Objekt 2 zu gewinnen.

Ausgehend von dem dargestellten Ausführungsbeispiel können die erfindungsgemäße Abtastvorrichtung 1 und das erfindungsgemäße Verfahren in vielfacher Weise abgewandelt werden. Beispielsweise ist es denkbar, dass die Schattenkante 10 des Schattenwerfers 9 einen gekrümmten Verlauf hat, und dass auch die Anordnung der LEDs 7 auf einer gekrümmten Linie erfolgt. Die Position der Lichtquellen 7 und des Schattenwerfers 9 relativ zueinander und relativ zum Objekt 2 kann einstellbar oder justierbar sein.

Im Strahlengang des von den Lichtquellen 7 ausgesandten Lichts 8 kann eine Strahlformungsoptik 20 vorgesehen sein, die in Figur 1 mit Strichlinien angedeutet ist, und die zu einer schärferen Abbildung des Lichts 8 auf die Unterseite des Objekts 2 ausgebildet ist. Bei der Strahlformungsoptik 20 kann es sich um eine Linse oder ein Linsensystem handeln. Denkbar wäre es insbesondere, dass es sich um eine Fresnellinse handelt. Die Strahlformungsoptik 20 kann Komponenten unterhalb und/oder überhalb des Schattenwerfers 9 umfassen, also ggf. auch vollständig zwischen dem Schattenwerfer 9 und dem Objekt liegen.

Bei der Schattenkante 9, d.h. der schattenwerfenden Struktur, muss es sich nicht um eine separate Komponente handeln. Denkbar wäre es vielmehr, dass ein Teil des Förderers, beispielsweise das Förderband oder ein Trägerelement, als schattenwerfende Struktur 9 genutzt wird. Statt einer schattenwerfenden Struktur 9 oder auch zusätzlich dazu könnte man eine lichtbrechende Struktur einsetzen, um eine Schattengrenze zu erzeugen.

In einer weiteren Ausführungsvariante können zwei parallel zueinander angeordnete Schattenkanten 10 vorgesehen sein, um als Lichtmuster 11 einen Lichtstreifen oder eine Lichtlinie hervorzurufen.

Statt lediglich eine Kamera 12 zu verwenden, könnten auch mehrere Kameras 12 vorgesehen sein, um das Lichtmuster 11 zu erfassen. Die Kamera 12 (oder mehrere Kameras 12) könnten direkt (wie in Figur 1 dargestellt) oder indirekt über Spiegel das Lichtmuster 11 auf dem Produkt 2 erfassen.

Schließlich könnte eine entsprechende Abtastvorrichtung 1 nicht nur für die Unterseite des Produkts 2, sondern auch für die Oberseite des Produkts 2 verwendet werden. Es wäre insbesondere denkbar, dass gleichzeitig eine Abtastvorrichtung 1 zum Abtasten der Unterseite und eine weitere Abtastvorrichtung 1 zum Abtasten der Oberfläche des Objekts 2 vorgesehen sind. Eine Schattengrenze 19 könnte auf diese Weise insbesondere um den gesamten Umfang des Produkts 2 gelegt und detektiert werden. Sofern erforderlich, können dazu mehrere Lichtquellen 7 und mehrere Schattenwerfer 9 mit mehreren Schattenkanten 10 vorgesehen werden. Die Zahl der Kameras 12 kann entsprechend angepasst werden, um den gesamten beleuchteten Bereich des Produkts 2 zu erfassen.

## Patentansprüche

1. Abtastvorrichtung (1) zum Ermitteln der Kontur eines Objekts (2), wobei die Abtastvorrichtung (1) eine Lichtquelle (7) zum Erzeugen eines Lichtmusters (11) auf der Oberfläche des Objekts (2) und eine Kamera (12) zum Erfassen des Lichtmusters (11) auf der Oberfläche des Objekts (2) aufweist, wobei die eine Lichtquelle (7) wenigstens eine inkohärente Lichtquelle (7) umfasst, und wobei zwischen der wenigstens einen Lichtquelle (7) und dem Objekt (2) ein das Lichtmuster (11) auf der Oberfläche des Objekts (2) definierender Schattenwerfer (9) vorgesehen ist, wobei eine Auswerteeinheit (15) vorgesehen und dazu eingerichtet ist,
a) in jeder Zeile des von der Kamera (12) erfassten Bildes zu ermitteln, an welchem Pixel ein bestimmter Schwellen-Lichtintensitätswert (Iₛ) erreicht oder überschritten wird und diesen Pixel dann als Teil der Schattengrenze (19) zu definieren, oder
b) in jeder Zeile des von der Kamera (12) erfassten Bildes die Lichtintensitätswerte (I₁) eines dunklen Bereichs (17) und (I₂) eines hellen Bereichs (18) des Lichtmusters (11) zu ermitteln und daraus einen Mittelwert (M) zu bilden, und denjenigen Pixel, dessen Lichtintensität am Bestem dem Mittelwert (M) entspricht, als Teil der Schattengrenze (19) zu definieren.

2. Abtastvorrichtung nach Anspruch 1, **dadurch gekennzeichnet, dass** die wenigstens eine Lichtquelle (7) eine Punktlichtquelle (7) ist.

3. Abtastvorrichtung nach einem der vorangehenden Ansprüche, **dadurch gekennzeichnet, dass** die wenigstens eine inkohärente Lichtquelle (7) eine Licht emittierende Diode (LED) ist.

4. Abtastvorrichtung nach einem der vorangehenden Ansprüche, **dadurch gekennzeichnet, dass** eine Mehrzahl von inkohärenten Lichtquellen (7) vorgesehen ist.

5. Abtastvorrichtung nach Anspruch 4, **dadurch gekennzeichnet, dass** mehrere Punktlichtquellen (7) auf einer Geraden angeordnet sind.

6. Abtastvorrichtung nach einem der vorangehenden Ansprüche, **dadurch gekennzeichnet, dass** der Schattenwerfer (9) eine Schattenkante (10) aufweist.

7. Abtastvorrichtung nach Anspruch 6, **dadurch gekennzeichnet, dass** die Schattenkante (10) gerade oder gekrümmt ist.

8. Abtastvorrichtung nach einem der vorangehenden Ansprüche, **dadurch gekennzeichnet, dass** eine Strahlformungsoptik (20) vorgesehen ist.

9. Abtastvorrichtung nach einem der vorangehenden Ansprüche, **dadurch gekennzeichnet, dass** die Position der wenigstens einen Lichtquelle (7), die Position und/oder Orientierung des Schattenwerfers (9) und/oder eine optische Eigenschaft der Strahlformungsoptik (20) einstellbar ist.

10. Abtastvorrichtung nach einem der vorangehenden Ansprüche, **dadurch gekennzeichnet, dass** die Auswerteeinheit (15) vorgesehen und dazu eingerichtet ist, in dem von der Kamera (12) erfassten Lichtmuster (11) den Verlauf einer Schattengrenze (19) zu ermitteln.

11. Abtastvorrichtung nach Anspruch 10, **dadurch gekennzeichnet, dass** die Auswerteeinheit (15) dazu eingerichtet ist, aus dem ermittelten Verlauf der Schattengrenze (19) eine Kontur des Objekts (2) zu bestimmen.

12. Verfahren zum Ermitteln der Kontur eines Objekts (2), wobei das Verfahren folgende Schritte aufweist:
Erzeugen eines Lichtmusters (11) auf der Oberfläche des Objekts (2) mittels wenigstens einer Lichtquelle (7), und
Erfassen des Lichtmusters (11) auf der Oberfläche des Objekts (2) mittels einer Kamera (12),
wobei die eine Lichtquelle (7) wenigstens eine Licht emittierende Diode (LED) umfasst, und
wobei ein Schattenwerfer (9) den Weg eines Teils des Lichts von der LED (7) zu dem Objekt (2) blockiert und dadurch auf dem Objekt (2) eine Schattengrenze (19) erzeugt, wobei
a) in jeder Zeile des von der Kamera (12) erfassten Bildes ermittelt wird, an welchem Pixel ein bestimmter Schwellen-Lichtintensitätswert (I_{S}) erreicht oder überschritten wird und dieser Pixel dann als Teil der Schattengrenze (19) definiert wird, oder
b) in jeder Zeile des von der Kamera (12) erfassten Bildes die Lichtintensitätswerte (I₁) eines dunklen Bereichs (17) und (I₂) eines hellen Bereichs (18) des Lichtmusters (11) ermittelt werden und ein Mittelwert (M) gebildet wird, und wobei derjenige Pixel, dessen Lichtintensität am Bestem dem Mittelwert (M) entspricht, als Teil der Schattengrenze (19) definiert wird.

13. Verfahren nach Anspruch 12, **dadurch gekennzeichnet, dass** eine Auswerteeinheit (15) in dem von der Kamera (12) erfassten Lichtmuster (11) den Verlauf der Schattengrenze (19) ermittelt.

14. Verfahren nach einem der Ansprüche 12 bis 13, **dadurch gekennzeichnet, dass** die wenigstens eine LED (7) geblitzt betrieben wird.

15. Schneidemaschine (40) zum Aufschneiden von Lebensmitteln, wobei die Schneidemaschine (40) ausgestattet oder kombiniert ist mit einer Abtastvorrichtung (1) gemäß einem der Ansprüche 1 bis 11.

16. Abtastvorrichtung (1) nach einem der Ansprüche 1 bis 11 in Kombination mit einer Schneideinrichtung (40) zur Gewinnung gewichtskonstanter Portionen oder Scheiben aus dem Objekt (2) in Abhängigkeit von einer Schnittplanung unter Berücksichtigung der mit der Abtastvorrichtung (1) ermittelten Kontur des Objekts (2).

## Claims

1. Scanning device (1) for detecting the contour of an object (2), said scanning device (1) comprising a light source (7) for generating a light pattern (11) on the surface of the object (2), and a camera (12) for detecting the light pattern (11) on the surface of the object (2), wherein the light source (7) comprises at least one incoherent light source (7), and wherein between the light source (7) and the object (2), a shadow caster (9) defining the light pattern (11) on the surface area of the object (2) is provided,
wherein an evaluation unit (15) is provided and configured to
a) detect in each line of the image taken by the camera (12) at which pixel a pre-determined threshold light intensity value (Iₛ) is reached or exceeded, and to define this pixel subsequently as part of the shadow border (19), or
b) determine in each line of the image taken by the camera (12) the light intensity values (I₁) of a dark area (17) and (I₂) of a bright area (18) of the light pattern (11) and to calculate a mean value (M) and to define the pixel whose light intensity is closest to the mean value (M) as part of the shadow border (19).

2. Scanning device according to claim 1, **characterized in that** the at least one light source (7) is a spot light source (7).

3. Scanning device according to one of the preceding claims, **characterized in that** the at least one incoherent light source (7) is a light emitting diode (LED).

4. Scanning device according to one of the preceding claims, **characterized in that** a plurality of incoherent light sources (7) is provided.

5. Scanning device according to claim 4, **characterized in that** a plurality of spot light sources (7) is arranged on a straight line.

6. Scanning device according to one of the preceding claims, **characterized in that** the shadow caster (9) comprises a shadow edge (10).

7. Scanning device according to claim 6, **characterized in that** the shadow edge (10) is straight or curved.

8. Scanning device according to one of the preceding claims, **characterized in that** beam-shaping optics (20) are provided.

9. Scanning device according to one of the preceding claims, **characterized in that** the position of the at least one light source (7), the position and/or orientation of the shadow caster (9) and/or an optical characteristic of the beam-shaping optics (20) are adjustable.

10. Scanning device according to one of the preceding claims, **characterized in that** the evaluation unit (15) is provided and adapted to determine the course of a shadow border (19) in the light pattern (11) detected by the camera (12).

11. Scanning device according to claim 10, **characterized in that** the evaluation unit (15) is adapted to determine a contour of the object (2) on the basis of the detected course of the shadow border (19).

12. Method for detecting the contour of an object (2), said method comprising the following steps:
- generating a light pattern (11) on the surface area of the object (2) by means of at least one light source (7),
- detecting the light pattern (11) on the surface area of the object (2) by means of a camera (12),
wherein the light source (7) comprises at least one light emitting diode (LED), and wherein a shadow caster (9) blocks the path of part of the light from the LED (7) to the object (2) and thereby generates a shadow border (19) on the object (2), wherein
a) in each line of the image taken by the camera (12) it is determined at which pixel a pre-determined threshold light intensity value (I_{S}) is reached or exceeded, and this pixel is then defined as part of the shadow border (19), or
b) in each line of the image taken by the camera (12) the light intensity values (I₁) of a dark area (17) and (I₂) of a bright area (18) of the light pattern (11) are determined and a mean value (M) is calculated, and wherein the pixel whose light intensity is closest to the mean value (M) is defined as part of the shadow border (19).

13. Method according to claim 12, **characterized in that** an evaluation unit (15) determines the course of the shadow border (19) in the light pattern (11) detected by the camera (12).

14. Method according to one of claims 12 to 13, **characterized in that** the at least one LED (7) is flash-operated.

15. Cutting machine (40) for cutting up food products, said cutting machine (40) being equipped or combined with a scanning device (1) according to one of claims 1 to 11.

16. Scanning device (1) according to one of claims 1 to 11 in combination with a cutting means (40) for obtaining constant-weight portions or slices from the object (2) in dependency on a cut planning, taking into consideration the contour of the object (2) detected by the scanning device (1).

## Revendications

1. Dispositif d'exploration par balayage (1) pour déterminer le contour d'un objet (2), le dispositif d'exploration par balayage (1) comprenant une source de lumière (7) pour produire un motif lumineux (11) sur la surface de l'objet (2), et une caméra (12) destinée à relever le motif lumineux (11) sur la surface de l'objet (2), dispositif
dans lequel ladite une source de lumière (7) comprend au moins une source de lumière non cohérente (7), et dans lequel entre ladite au moins une source de lumière (7) et l'objet (2), est prévu un élément projecteur d'ombre (9) définissant le motif lumineux (11) sur la surface de l'objet (2),
et dans lequel il est prévu une unité de traitement de données (15), qui est conçue pour
a) déterminer, dans chaque ligne de l'image relevée par la caméra (12), au niveau de quel pixel on atteint ou dépasse une valeur d'intensité lumineuse de seuil (Iₛ) déterminée, et définir alors ce pixel comme faisant partie de la limite d'ombre (19), ou bien
b) déterminer dans chaque ligne de l'image relevée par la caméra (12), les valeurs d'intensité lumineuse (I₁) d'une zone foncée (17) et (I₂) d'une zone claire (18) du motif lumineux (11), et en former une valeur moyenne (M), et définir le pixel dont l'intensité lumineuse correspond le mieux à la valeur moyenne (M), comme faisant partie de la limite d'ombre (19).

2. Dispositif d'exploration par balayage selon la revendication 1, **caractérisé en ce que** ladite au moins une source de lumière (7) est une source de lumière ponctuelle (7).

3. Dispositif d'exploration par balayage selon l'une des revendications précédentes, **caractérisé en ce que** ladite au moins une source de lumière non cohérente (7) est une diode électroluminescente (LED).

4. Dispositif d'exploration par balayage selon l'une des revendications précédentes, **caractérisé en ce qu'**il est prévu une pluralité de sources de lumière non cohérente (7).

5. Dispositif d'exploration par balayage selon la revendication 4, **caractérisé en ce que** plusieurs sources de lumière ponctuelles (7) sont agencées sur une droite.

6. Dispositif d'exploration par balayage selon l'une des revendications précédentes, **caractérisé en ce que** l'élément projecteur d'ombre (9) présente un bord de formation d'ombre (10).

7. Dispositif d'exploration par balayage selon la revendication 6, **caractérisé en ce que** le bord de formation d'ombre (10) est d'une configuration rectiligne ou courbe.

8. Dispositif d'exploration par balayage selon l'une des revendications précédentes, **caractérisé en ce qu'**il est prévu une optique de formation de faisceau (20).

9. Dispositif d'exploration par balayage selon l'une des revendications précédentes, **caractérisé en ce que** la position de ladite au moins une source de lumière (7), la position et/ou l'orientation de l'élément projecteur d'ombre (9) et/ou une propriété optique de l'optique de formation de faisceau (20) sont réglables.

10. Dispositif d'exploration par balayage selon l'une des revendications précédentes, **caractérisé en ce que** l'unité de traitement de données (15) est prévue et conçue pour déterminer le tracé d'une limite d'ombre (19) dans le motif lumineux (11) relevé par la caméra (12).

11. Dispositif d'exploration par balayage selon la revendication 10, **caractérisé en ce que** l'unité de traitement de données (15) est conçue pour déterminer un contour de l'objet (2), à partir du tracé de la limite d'ombre (19) ayant été déterminé.

12. Procédé pour déterminer le contour d'un objet (2), le procédé présentant les étapes suivantes :
production d'un motif lumineux (11) sur la surface de l'objet (2) au moyen d'au moins une source de lumière (7), et
relevé du motif lumineux (11) sur la surface de l'objet (2), au moyen d'une caméra (12),
ladite au moins une source de lumière (7) comprenant au moins une diode électroluminescente (LED), et
un élément projecteur d'ombre (9) bloquant le parcours de cheminement d'une partie de la lumière de la LED (7) vers l'objet (2), en produisant ainsi une limite d'ombre (19) sur l'objet (2), procédé d'après lequel
a) on détermine, dans chaque ligne de l'image relevée par la caméra (12), au niveau de quel pixel on atteint ou dépasse une valeur d'intensité lumineuse de seuil (Iₛ) déterminée, et ce pixel est alors défini comme faisant partie de la limite d'ombre (19), ou bien
b) on détermine dans chaque ligne de l'image relevée par la caméra (12), les valeurs d'intensité lumineuse (I₁) d'une zone foncée (17) et (I₂) d'une zone claire (18) du motif lumineux (11), et on en forme une valeur moyenne (M), et le pixel dont l'intensité lumineuse correspond le mieux à la valeur moyenne (M), est défini comme faisant partie de la limite d'ombre (19).

13. Procédé selon la revendication 12, **caractérisé en ce qu'**une unité de traitement de données (15) détermine le tracé de la limite d'ombre (19) dans le motif lumineux (11) relevé par la caméra (12).

14. Procédé selon l'une des revendications 12 à 13, **caractérisé en ce que** l'on fait fonctionner ladite au moins une LED (7) selon un mode par flashs successifs.

15. Machine de coupe (40) pour assurer la coupe de produits alimentaires, la machine de coupe (40) étant équipée d'un dispositif d'exploration par balayage (1) selon l'une des revendications 1 à 11, ou combinée avec un tel dispositif.

16. Dispositif d'exploration par balayage (1) selon l'une des revendications 1 à 11, en combinaison avec un dispositif de coupe (40) pour l'obtention de portions ou de tranches de poids constant de l'objet (2), en fonction d'une planification de coupe, en tenant compte du contour de l'objet (2), qui a été déterminé à l'aide du dispositif d'exploration par balayage (1).
